# EUROPEAN PATENT APPLICATION

(11) **EP 2 028 826 A1**
(43) Date of publication of application: **25.02.2009**
(21) Application number: 08162650.9
(22) Date of filing: 20.08.2008
(51) Int. Cl.: H04L 29/08

(54) **SIP-based user registration method, system, terminal and server**

(30) Priority: 20.08.2007 CN 200710142035
(71) Applicant: Huawei Technologies Co., Ltd., Longgang District, Shenzhen Guangdong 518129 (CN)
(72) Inventor: Hu, Haihua, 518129, Shenzhen Guangdong (CN); Yuan, Hongjin, 518129, Shenzhen Guangdong (CN); Li, Yang, 518129, Shenzhen Guangdong (CN); Wang, Min, 518129, Shenzhen Guangdong (CN); Fan, Gaofeng, 518129, Shenzhen Guangdong (CN)
(74) Representative: Thun, Clemens

(57) **Abstract**

A session initiation protocol (SIP)-based user registration method, a system, a terminal, and a server are provided. The method includes the following blocks. A terminal sends a registration request message (303) carrying a user number to a registrar; and then, the terminal receives a message (304) returned by the registrar. When the message indicates that the user number has already been registered on other terminal and it is determined to replace the registration on the other terminal (305), the terminal sends a message (306,308) requesting to replace a previous registration to the registrar adapted to request to replace the registration on the other terminal with the current registration. Another SIP-based user registration method is provided. The method includes the following blocks. A registration request message (303) carrying a user number is received sent by a terminal; after discovering the user number has already been registered on other terminal, a message (304) indicating that the user number has already been registered on the other terminal is sent to the terminal; and then, on receiving a message (306,308) of requesting to replace a previous registration returned by the terminal, the terminal sending the request is registered, and the registration on the other terminal are deregistered and further information (310) is sent to inform that the registration on the other terminal has been deregistered. Through the present invention, the user may register on the other terminal before deregistering the original registration.

## Description

### CROSS-REFERENCE

The application claims the priority from the Chinese patent application No. 200710142035.9 submitted with the State Intellectual Property Office of P.R.C. on August 20, 2007, entitled "SIP-BASED USER REGISTRATION METHOD, SYSTEM, TERMINAL, AND SERVER", the contents of which are incorporated herein in entirety by reference.

### FIELD OF THE INVENTION

The present invention relates to the communication technical field, and more particularly to a session initiation protocol (SIP)-based user registration method, system, terminal, and server.

### BACKGROUND

Session initiation protocol (SIP)is a session control protocol based on Internet protocol (IP), generally serves as a main communication control protocol in a next generation network (NGN), an IP multimedia subsystem (IMS) network, or other types of network, for establishing, modifying, terminating, and controlling a multimedia session process.

The SIP defines specifications of a user terminal logging in and being registered on a registrar, and an NGN network is taken as an example to describe the process of terminal registration.

In the NGN network, the registrar functions through softswitch, every user owns a user number, and one user number can only be successfully registered on the softswitch to which the user number belongs from one terminal at a time.

When the user intends to log in and be registered on the softswitch from a terminal A by using the user number, the terminal A sends a registration request (REGISTER) message to the softswitch to which the user number belongs so as to apply for registration. The REGISTER message carries a call identifier (Call-ID), the user number, and registration address information of the terminal. User authentication between the softswitch and the terminal A is implemented through message exchange, and after the authentication is passed, the softswitch stores corresponding relations between the user number and the registration address information of the terminal. Further, after the user finishes the registration on the softswitch from the terminal A, the terminal A may regularly send a REGISTER message carrying the same Call-ID, user number, and registration address information to the softswitch, so as to maintain the linking status with the softswitch.

During the research and practice of the prior art, the inventor finds out the following problems. Sometimes, the user after being registered may leave without deregistration due to certain reasons, and may have to register again through other terminal in a different place.

When the user initiates a new registration request to the softswitch on other terminal B with the same user number, the softswitch provides two processing modes.

One mode is returning failure information to reject the registration request from the terminal B, and obviously this processing mode cannot meet the user's demand.

The other mode is replacing the registration of the terminal A with that of the terminal B. However, as the terminal A continues to regularly send the REGISTER message for being kept in linking, the softswitch receives and adopts the message as a new registration request to exchange messages with the terminal A for implementing authentication. After the authentication is passed, the previous registration of the terminal B is replaced again. Thereby, the terminals A and B will be stuck in a circular registration to the softswitch, and cannot provide normal services for the user, nor meet the user's demand.

### SUMMARY

Accordingly, the present invention is provided through embodiments to achieve the purpose that a user may register on other terminal before deregistering a previous registration.

In order to solve the above technical problem, a session initiation protocol (SIP)-based user registration method is provided in a first aspect of the embodiments of the present invention. The method includes the following blocks.

A terminal sends a registration request message carrying a user number to a registrar; and

then, the terminal receives a message returned by the registrar. When the message indicates that the user number has already been registered on other terminal and it is determined to replace the registration on the other terminal, the terminal sends a message requesting to replace a previous registration to the registrar for requesting to replace the registration on the other terminal with the current registration.

In order to solve the above technical problem, another SIP-based user registration method is provided in a second aspect of the embodiments of the present invention. The method includes the following blocks.

A registration request message carrying a user number is received sent by a terminal;

after discovering the user number has already been registered on other terminal, a message indicating that the user number has already been registered on the other terminal is sent to the terminal; and

then, on receiving a message of requesting to replace a previous registration returned by the terminal, the terminal sending the request is registered, and the registration on the other terminal is deregistered and further information is sent to the other teminal to inform that the registration on the other terminal has been deregistered.

In order to solve the above technical problem, an SIP-based user registration system including a first terminal, a registrar, and a second terminal is provided in a third aspect of the embodiments of the present invention;

the first terminal is adapted to send a registration request message carrying a user number, and send a message requesting to replace a previous registration on receiving a message indicating that the user number has already been registered on the second terminal and when it is determined to replace the registration on the second terminal;

the registrar is adapted to receive the registration request message, send a message indicating that the user number has already been registered on the second terminal to the first terminal after discovering that the user number has already been registered on the -second terminal, register the first terminal on receiving the message requesting to replace a previous registration returned by the first terminal, then deregister the registration of the second terminal, and notify the second terminal that the registration of the second terminal has been deregistered; and

the second terminal is adapted to stop sending any registration request message to the registrar on receiving the notification.

In order to solve the above technical problem, a terminal including a transmitting/receiving unit, a parsing unit, and a processing unit is also provided in a fourth aspect of the embodiments of the present invention.

The transmitting/receiving unit is adapted to send a registration request message carrying a user number to a registrar, and receive a message returned by the registrar;

The parsing unit is adapted to parse the message returned by the registrar, and determine whether the user number has already been registered on other terminal; and

The processing unit is adapted to send a message requesting to replace a previous registration to the registrar when the user number has already been registered on the other terminal and it is determined to replace the registration on the other terminal.

In order to solve the above technical problem, another terminal including a receiving unit and a processing unit is provided in a fifth aspect of the embodiments of the present invention.

The receiving unit is adapted to receive a message informing that a registration has been deregistered; and

the processing unit is adapted to make the terminal stop sending any registration request message to a registrar on receiving the message informing that a registration has been deregistered.

In order to solve the above technical problem, a registrar including a receiving unit, a deregistration unit, and a sending unit is further provided in a sixth aspect of the embodiments of the present invention.

The receiving unit is adapted to receive a registration request message carrying a user number from a terminal, and receive a message requesting to replace a previous registration returned by the registrar;

the deregistration unit is adapted to register the terminal sending the request and deregister the previous registration on the other terminal according to the message requesting to replace the previous registration; and

the sending unit is adapted to send a message indicating that the user number has already been registered on other terminal to the terminal after discovering that the user number has already been registered on the other terminal, and send a message to the other terminal informing that the deregistration unit has deregistered the registration on the other terminal.

In view of the above, technical schemes of the embodiments of the present invention are provided through embodiments when a user has to register on other terminal before deregistering a previous registration on an original registration terminal. Therefore, the registrar may inform the terminal of the original registration that the original registration has been deregistered after replacing the original registration with the registration on a new terminal. As such, the terminal of the original registration may not regularly send a registration request (REGISTER) message for being kept in linking to the registrar. Therefore, the original terminal and the terminal of the new registration may not be stuck in a circular registration.

Therefore, the user may register on the other terminal before deregistering an original registration, so as to meet the user's demand.

### BRIEF DESCRIPTION OF THE DRAWINGS

Figure 1 is a flow chart of an SIP-based user registration method according to embodiments of the present invention;

Figure 2 is a signaling flow chart of an SIP-based user registration method according to a first method embodiment of the present invention;

Figure 3 is a signaling flow chart of an SIP-based user registration method according to a second method embodiment of the present invention;

Figure 4 is a structural view of an SIP-based user registration system according to embodiments of the present invention;

Figure 5 is a structural view of devices according to a first device embodiment of the present invention;

Figure 6 is a structural view of devices according to a second device embodiment of the present invention; and

Figure 7 is a structural view of a registrar according to the embodiments of the present invention.

### DETAILED DESCRIPTION

In the embodiments of the present invention, a session initiation protocol (SIP)-based user registration method, a system, a terminal, and a server are provided to meet the user's demand of registering on other terminal before deregistering a previous registration.

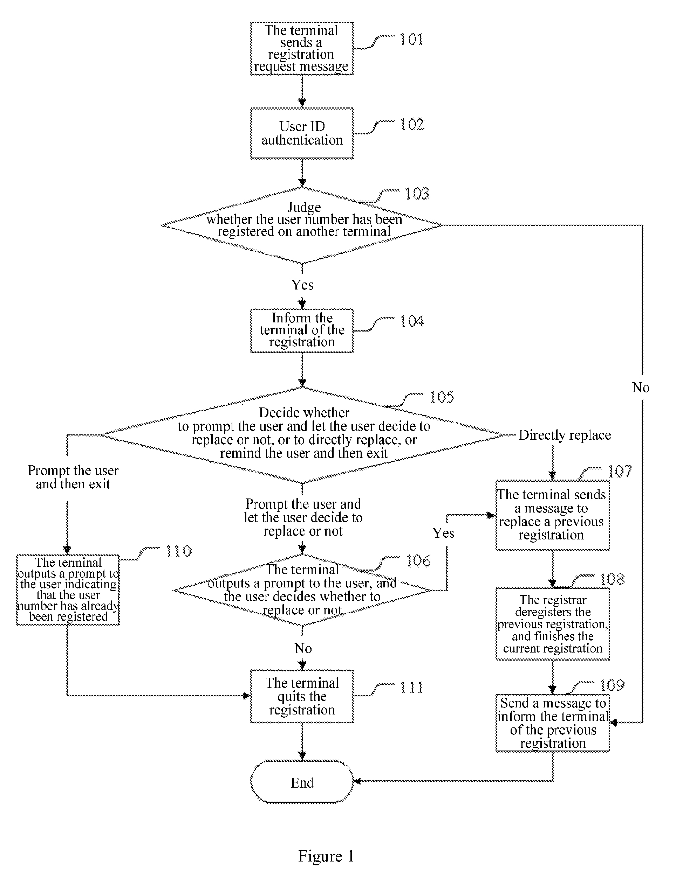

Figure 1 is a flow chart of an SIP-based user registration method according to embodiments of the present invention. Referring to Figure 1, the method includes the following blocks.

Block 101: A user sends a registration request message to a registrar through a terminal.

The terminal sends a registration request message to the registrar to which the user number belongs, so as to apply for registration. The registration request message carries a Call-ID, the user number, and registration address information of the terminal.

Block 102: The registrar authenticates the ID of the user initiating the registration request.

Block 103: After the authentication is passed, it is determined whether the user number has been registered on other terminal. If the user number has been registered on the other terminal, the process proceeds to Block 104; and if the user number has not been registered on the other terminal, the process proceeds to Block 109.

Block 104: The registrar returns a message to the terminal to inform the terminal that a relation of registration has been established for the user number through the other terminal.

The message may carry registration address information already bound to the user number.

Block 105: According to preset rules, the terminal determines whether to prompt the user to decide by himself whether to replace or not, or to directly replace, or to remind the user and then exit.

If it is determined to prompt the user to decide by himself whether to replace the previous registration or not, the process proceeds to Block 106.

If it is determined to directly replace the previous registration, the process proceeds to Block 107.

If it is determined to remind the user and then exit, the process proceeds to Block 110.

The preset rules mentioned above may be set by the user in operation, or by the manufacturer before the terminal leaves the factory, or by the designer.

Block 106: The terminal outputs a prompt to prompt the user that the user number has already been registered on the other terminal, and the user determines whether to replace the previous registration with the current registration. If the user determines to replace the previous registration with the current registration, the process proceeds to Block 107, and if the user determines not to replace the previous registration with the current registration, the process proceeds to Block 111.

The prompt may be output through a display interface or an audio frequency.

Block 107: The terminal sends a message to replace a previous registration to the registrar.

Block 108: The registrar deregisters the previous registration, and stores a corresponding relation between the user number and registration address information of the terminal sending the registration request, so as to fulfill the registration by the user on the registrar through the terminal.

Block 109: The registrar sends a message to inform the terminal bound in the previous registration that the previous registration has already been deregistered.

On receiving the message, the terminal bound in the previous registration stops sending any registration request message to the registrar, and the process ends.

Block 110: The terminal outputs a prompt to prompt the user that the user number has already been registered on the other terminal.

Block 111: The terminal quits the registration, and the process ends.

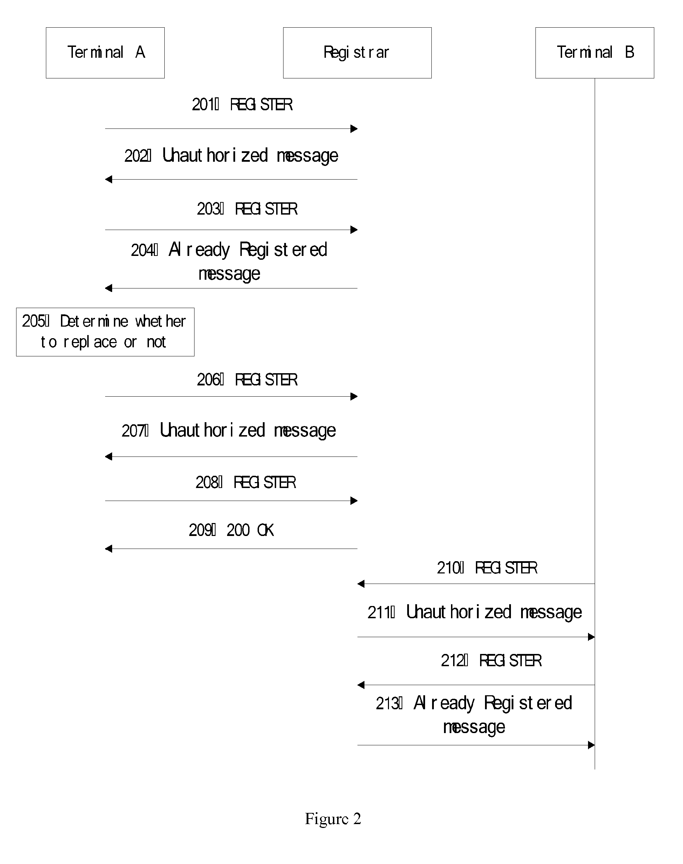

For example, the originally bound terminal serves as a terminal B, and the currently adopted terminal is a terminal A. A signaling flow chart illustrating an SIP-based user registration method according to a first method embodiment of the present invention is shown in Figure 2. The method includes the following blocks.

Block 201: The terminal A sends a registration request (REGISTER) message to a registrar.

A user logs in on the terminal A, and the terminal A sends the registration request (REGISTER) message to the registrar. In this message, a Call-ID header field thereof carries a unique ID indicating this registration session, a TO field carries a user number of the user, and a Contact field carries address information of the terminal A.

Block 202: The registrar returns an Unauthorized message.

The registrar returns the Unauthorized message requesting the terminal A to send a user number password for authentication. A header field of the message carries a challenging word and an encryption algorithm for password encryption.

Block 203: The terminal A sends a registration request (REGISTER) message to the registrar.

The terminal A sends the registration request (REGISTER) message for registration again. A header field of the message carries information such as a user name, a password, a challenging word, and an encryption algorithm for authentication in addition to the Call-ID, the user number, and the registration address. Meanwhile, the Call-ID is identical to that carried by the registration request (REGISTER) in Block 201.

Block 204: The authentication is passed. However, as the user number has already been registered on the other terminal, the registrar returns a message to the terminal to inform that the user number has already been established a regiateration relation through the other terminal.

The registrar passes the authentication on the user ID, and queries the stored information already registered for the user number. It is queried that the currently available terminal B is successfully registered with the same user number and kept in linking, and the registered Call-ID and address information are different from the information carried in the registration request initiated by the terminal A this time. The registrar returns an Already Registered message to the terminal A indicating that the terminal has already been registered and kept in linking. The message may further carry the already registered registration address information, i.e., the registration address information of the terminal B in this embodiment.

In this block, the message is an SIP-format message, and an unallocated message number in the SIP may be adopted to serve as the number of this message, for example, a 409 message.

An SIP message defined by SIP protocol has two parts, namely, a message header and a message body, and some message may not have the message body, for example, the message adopted in this block. The format of the message header in the above message is exemplified below.

First line: SIP/2.0 409 AlreadyRegistered

According to the SIP format, the first line includes a protocol version number, a message number, and a message description. The message number in this embodiment adopts 409 for example.

FROM: a field specified in the SIP format, carrying an address of the registrar, and having a format identical to that of the FROM field of the registration request (REGISTER) message for response.

To: a field specified in the SIP format, carrying the user number of the current registration, having a format identical to that of the registration request (REGISTER) message for response, and containing a tag value allocated by the registrar.

Call-ID: a field specified in the SIP format, identifying this call, and having a format identical to that of the registration request (REGISTER) message for response.

Cseq: a field specified in the SIP format, having a format identical to that of the registration request (REGISTER) message for response, and representing the ID of the message together with the Call-ID.

Contact: carrying registration address information already registered by the user number on the registrar this time, and carrying an expires parameter of the terminal linked to the registrar in the registration. The content of the field is optional, and the Contact field is needed when the message carries the already registered registration address information.

Content-Length: representing the length of the Contact field.

The message format is exemplified as follows:

SIP/2.0 409 AlreadyRegistered

From: <sip:075589834250@10.75.35.161>; tag=3326082552

To: <sip:075589834250@10.75.35.161>; tag=23f709fb

CSeq: 2 REGISTER

Call-ID: 1463786448@10.164.8.70

Via: SIP/2.0/UDP 10.164.8.70:5060; branch=z9hG4bK730331344; rport=5060

Contact: <sip:075589834250@10.170.8.100:5060; user=phone>; expires=300

Content-Length: 0

The terminal IP address is 10.164.8.70.

The address of the registrar is 10.75.35.161.

The terminal address has already been registered and kept in linking, and in this embodiment, the registration address information of the terminal B is 10.170.8.100.

The user number is 075589834250@10.75.35.161.

Block 205: On receiving the message, the terminal A determines whether to replace the previous registration or to remind the user to decide by himself whether to replace or not according to preset rules.

If it is up to the terminal whether to replace or not, the process proceeds to Block 206 when the terminal determines to replace directly. When it is determined to quit, the terminal informs the user that the user number has already been registered on other terminal and directly quits the process. If the information returned in Block 204 carries address information already registered by the user, the information is the registration address information of the terminal B in this embodiment. At this time, the terminal may extract the registration address information of the terminal B, so as to prompt the user that the user number adopted for the current login has already been registered, and display the address information of the terminal B to the user. Thereby, the user is informed of another already existing registration, so the login fails, and the registration process ends.

If the preset strategy is that the user determines whether to replace the previous registration or not, the terminal outputs a prompt to prompt the user that the user number has already been registered on the other terminal, and the user determines whether to replace the previous registration with the current registration. If the user determines to replace the previous registration with the current registration, the process proceeds to Block 206, and if the user determines not to replace the previous registration with the current registration, quit the registration. If the information returned inBlock 204 carries address information already registered by the user, the information is the registration address information of the terminal B in this embodiment. At this time, the terminal may extract the registration address information of the terminal B, so as to prompt the user that the address the user number previously logs in is the registration address of the terminal B.

The performing of Block 206 indicates that the terminal has determinated to replace the previous registration. In Block 206, the terminal A sends a message requesting to replace the previous registration to the registrar.

There are various types of messages capable of requesting to replace the previous registration, and a registration request (REGISTER) message is taken as an example in this embodiment for description.

In the registration request (REGISTER) message capable of requesting to replace the previous registration, the Call-ID header field carries an ID of the current registration session, and the To field carries the registration user number.

The registration request (REGISTER) message carries two lines of Contact header field information. One is the previous registration address information desired to be deregistered and having an expires parameter of 0. The other is the address information of the terminal A for replacing the previous registration. The two lines of information have no sequence in position.

The format of the Contact header field is exemplified as follows:

Contact: <sip:Client B address>; expires=0

Contact: <sip:Client A address>; expires=300

The format of the whole registration request (REGISTER) message is exemplified as follows:

REGISTER sip: 10.75.35.161:5060 SIP/2.0

Via: SIP/2.0/UDP 10.164.8.70:5060; branch=z9hG4bK3562787246

From: <sip:075589834250@10.75.35.161>; tag=3326082552

To: <sip:075589834250@10.75.35.161>

Call-ID: 1463786448@10.164.8.70

CSeq: 3 REGISTER

Contact: <sip:075589834250@10.164.8.70:5060>

Contact: <sip:075589834250@10.170.8.100:5060; user=phone>; expires=0

Max-Forwards: 5

User-Agent: Softphone v1.0

Expires: 300

Content-Length: 0

In subsequent blocks, it can be known by reading the Contact header field information that the registration request (REGISTER) message is a message requesting to replace the previous registration.

In this block, a standard registration request (REGISTER) message may still be adopted, and in subsequent blocks, the message carries information of deregistering the previous registration to request to replace the previous registration.

Block 207: The registrar returns an Unauthorized message.

The registrar returns the Unauthorized message requesting the terminal A to send a user number password for authentication. A header field of the message carries a challenging word and an encryption algorithm for password encryption.

Block 208: The terminal A sends a registration request (REGISTER) message again.

The terminal A sends the registration request (REGISTER) message for registration again. A header field of the message carries information such as a user name, a password, a challenging word, and an encryption algorithm for authentication in addition to the Call-ID, user number, and registration address carried in Block 206. Meanwhile, the Call-ID is identical to that carried by the registration request (REGISTER) in Block 206.

If the terminal sends a standard registration request (REGISTER) message in Block 206, the registration request (REGISTER) message sent in this block carries information of deregistering the previous registration to request to replace the previous registration. The implementing method can refer to the description in Block 206.

Block 209: If the authentication is passed, the registrar replaces the registration on the terminal B with the registration on the terminal A, and returns a message indicating registration success (200 OK).

The registrar passes the authentication on the user ID, and acquires two lines of Contact header fields from the Contact header field in the received registration request (REGISTER) message. Then, the registrar sequentially processes the two lines of contact header fields one after another, and queries according to the registration address information of each line, whether the registrar has already stored the registration relation between the address and the user number.

If the Contact line containing the address information of the terminal of the previous registration is previous, it can be found when processing the first line that the address information of the terminal already exists and the terminal specified by the address is linked with the server. Thereby, it is further determined whether the Contact line carries an expires parameter. If the Contact line carries an expires parameter and the expires parameter is 0, the registrar sets a state of the registration relation between the registration address and the user number carried in this line as a deregistration state, or the registrar deletes the registration information to set the state of the registration relation between the registration address and the user number carried in this line as the deregistration state. In this embodiment, the registration address carried in this line is the terminal B, and the registrar may set the registration information of the terminal B as being in a deregistered state or delete the registration information of the terminal B. In this block, it is generally determined by the strategy preset in the registrar the manner adopted to deregister the previous registration.

After handling the Contact line carrying the information of the previous registration, the registrar continues to process the other Contact line. In particular, the registrar determines the registration address information carried in this line has not been stored in the registrar, and the expires parameter carried in this line meet the requirement of the SIP specification and is not 0, or the expires parameter does not exist. Therefore, the registrar adds the registration address carried in this line to a registration information list of the user number. The stored information includes a Call-ID, CSeq, registration address, and status. The status is set as keeping linking. In this embodiment, the registration address carried in this line is the registration address of the terminal A, and the registrar sets the registration address information of the terminal A as registered and kept in linking.

The registrar returns the message indicating registration success to the terminal A according to the SIP protocol specification.

If the Contact line containing the address information of the terminal of the current registration is preceding, it can be found when processing the first line that the registration address information carried in this line has not been stored in the registrar, and the expires parameter carried in this line meets the requirement of the SIP specification and is not 0, or the expires parameter does not exist. Therefore, the registrar turns to process the other Contact line. In particular, the registrar first deregisters the previous registration on the terminal, and then registers the terminal of the current registration. At this time, the Call-IDs are compared to find the difference, so it can be further determined that the two registrations are different.

At this time, on the registrar, the registration on the terminal B is replaced by the registration on the terminal A. However, as the terminal B does not know that the registration on the termianl B has been deregistered, it will continue sending the registration request (REGISTER) message for being kept in linking to the registrar, and therefore the registrar needs to inform the terminal B that the registration on the termianl B has been deregistered.

The terminal B can be informed of the deregistration in two ways. One is that the registrar returns an already deregistered message to the terminal B on receiving the registration request (REGISTER) message for being kept in linking from the terminal B. The other is that the registrar directly informs that the registration on the termianl B has been deregistered after the terminal B is deregistered.

In the first method embodiment of the SIP-based user registration in the present invention, the first way is adopted. Therefore, the registrar returns an already deregistered message to the terminal B on receiving the registration request (REGISTER) message for being kept in linking sent by the terminal B, and accordingly a signaling flow is described below.

Block 210: The terminal B regularly sends a registration request (REGISTER) message for being kept in linking to the registrar.

Block 211: The registrar returns an Unauthorized message and requests for authentification.

The registrar returns the Unauthorized message requesting the terminal B to send a user number password for authentication. A header field of the message carries a challenging word and an encryption algorithm for password encryption.

Block 212: The terminal B sends a registration request (REGISTER) message to the registrar.

The terminal B sends the registration request (REGISTER) message for registration again. A header field of the message carries information such as a user name, a password, a challenging word, and an encryption algorithm for authentication in addition to the Call-ID, user number, and registration address.

Block 213: After passing the authentication, the registrar sends a message to inform the terminal B that the registration on the terminal B has been deregistered.

After passing the authentication, the registrar queries the registration address information kept in linking on the registrar by the user number carried in the registration request (REGISTER) message. When it is queried that the registration address information is different from the registration address information requested by the terminal B, and the stored Call-ID is different from the Call-ID carried in the registration request (REGISTER) message, the registrar returns an Already Registered message to inform the terminal B of the deregistration. The Contact header field of the Already Registered message carries the registration address information of the terminal A currently linked to the registrar. In this block, the format of the Already Registered message may refer to the format in Block 204.

After the terminal B sends a registration request to the registrar Block 212 again, and receives the Already Registered message in this block, the terminal B may know that the corresponding registration of the terminal B on the registrar has been deregistered, and the registration request (REGISTER) message for being kept in linking will no longer be regularly sent to the registrar. Meanwhile, the terminal B may output a display to prompt the user that the registration on the terminal B has been deregistered. If the Contact header field of the Already Registered message returned by the registrar carries the registration address information of the terminal A currently linked to the registrar, the terminal B may output a display to prompt the user that the user number has already been registered on other terminal. The registration address is the registration address of the terminal A, and the registration of the terminal B has already been deregistered.

The process ends.

It is mentioned in the first method embodiment of the SIP-based user registration in the present invention that there are various types of messages capable of requesting to replace the previous registration. In the first embodiment, a registration request (REGISTER) message carrying two lines of Contact header field information serves as the message for requesting to replace the previous registration. In a second method embodiment of the SIP-based user registration in the present invention, another type of message capable of requesting to replace the previous registration is provided.

Moreover, in the second embodiment, another method of informing the terminal B of the Already Deregistered message will be described in detail below.

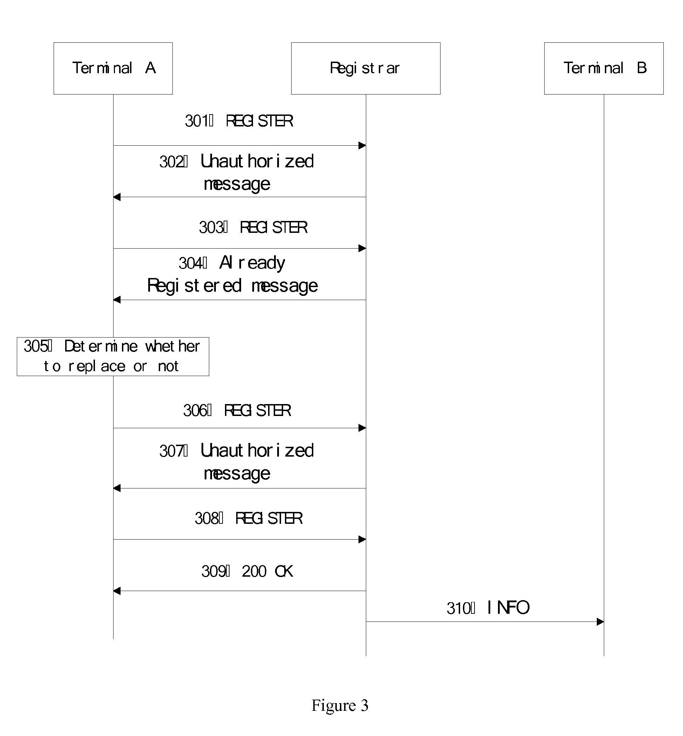

For example, the originally bound terminal still serves as the terminal B, and the currently adopted terminal is the terminal A. A signaling flow chart illustrating a second method embodiment of the SIP-based user registration of the present invention is shown in Figure 3. The method includes the following blocks.

Block 301: The terminal A sends a registration request (REGISTER) message to the registrar.

A user logs in on the terminal A, and the terminal A sends the registration request (REGISTER) message to the registrar. A Call-ID header field of the message carries a unique ID indicating this registration session, a TO field carries a user number, and a Contact field carries address information of the terminal A.

Block 302: The registrar returns an Unauthorized message.

The registrar returns the Unauthorized message requesting the terminal A to send a user number password for authentication. A header field of the message carries a challenging word and an encryption algorithm for password encryption.

Block 303: The terminal A sends a registration request (REGISTER) message to the registrar.

The terminal A sends the registration request (REGISTER) message for registration again. A header field of the message carries information such as a user name, a password, a challenging word, and an encryption algorithm for authentication in addition to the Call-ID, user number, and registration address. Meanwhile, the Call-ID is identical to that carried by the registration request (REGISTER) in Block 301.

Block 304: The authentication is passed. However, as the user number has already been registered on the other terminal, the registrar returns a message to the terminal to inform the terminal that the user number has already been registered on the other terminal.

The registrar passes the authentication on the user ID, and queries the stored information already registered for the user number. It is queried that the currently available terminal B is successfully registered with the same user number and kept in linking. The registered Call-ID and address information are different from the information carried in the registration request initiated by the terminal A this time. The registrar returns an Already Registered message to the terminal A indicating that the terminal has already been registered and kept in linking. The message further carries the already registered registration address information, i.e., the registration address information of the terminal B in this embodiment.

In this block, the message is an SIP-format message, and an unallocated message number in the SIP may be adopted to serve as the number of this message, for example, a 409 message.

An SIP message defined by SIP has two parts, namely, a message header and a message body, and some message does not have a message body, for example, the message adopted in this block. The format of the message header in the above message is exemplified below.

The first line: SIP/2.0 409 AlreadyRegistered

FROM: having a format identical to that of the FROM field sent by the registration request (REGISTER) message for response.

To: carrying the user number of the current registration, having a format identical to that of the registration request (REGISTER) message for response, and containing a tag value allocated by the registrar.

Call-ID: having a format identical to that of the registration request (REGISTER) message for response.

Cseq: having a format identical to that of the registration request (REGISTER) message for response.

Contact: carrying registration address information already registered by the user number on the registrar this time, and carrying an expires parameter of the terminal linked to the registrar in the registration. The content of the field is optional, and the Contact field is needed when the message carries the already registered registration address information.

Content-Length: representing the length of the Contact field.

The message format is exemplified as follows:

SIP/2.0 409 AlreadyRegistered

From: <sip:075589834250@10.75.35.161>; tag=3326082552

To: <sip:075589834250@10.75.35.161>; tag=23f709fb

CSeq: 2 REGISTER

Call-ID: 1463786448@10.164.8.70

Via: SIP/2.0/UDP 10.164.8.70:5060; branch=z9hG4bK730331344; rport=5060

Contact: <sip:075589834250@10.170.8.100:5060; user=phone>; expires=300

Content-Length: 0

The terminal IP address is 10.164.8.70.

The address of the registrar is 10.75.35.161.

The terminal address has already been registered and kept in linking, and in this embodiment, the registration address information of the terminal B is 10.170.8.100.

The user number is 075589834250@10.75.35.161.

Block 305: On receiving the message, the terminal A determines whether to replace the previous registration or to prompt the user to decide by himself whether to replace or not according to preset rules.

If it is up to the terminal whether to replace or not, the process proceeds to Block 306 when the terminal determines to replace directly. When it is determined to quit, the terminal informs the user that the user number has already been registered on the other terminal and the terminal directly quit the process. If the information returned in Block 304 carries address information already registered by the user, the information is the registration address information of the terminal B in this embodiment. At this time, the terminal may extract the registration address information of the terminal B, so as to remind the user that the user number adopted for the current login has already been registered and display the address information of the terminal B to the user. Thereby, the user is informed of another already existing registration, so the login fails, and the registration process ends.

If the preset strategy is that the user determines whether to replace the previous registration or not, the terminal outputs a prompt to the user indicating that the user number has already been registered on the other terminal, and the user determines whether to replace the previous registration with the current registration. If the user determines to replace the previous registration with the current registration, the process porceeds to Block 306, and if the user determines not to replace the previous registration with the current registration, quit the registration. If the information returned in Block 304 carries address information already registered by the user, the information is the registration address information of the terminal B in this embodiment. At this time, the terminal may extract the registration address information of the terminal B, so as to remind the user that the address the user number previously logs in is the registration address of the terminal B.

The performing of Block 306 indicates that the terminal has determinated to replace the previous registration. In Block 306, the terminal A sends a message requesting to replace the previous registration to the registrar.

There are various types of messages capable of requesting to replace the previous registration, and another registration request (REGISTER) message is taken as an example in this embodiment for description.

In the registration request (REGISTER) message, the Call-ID header field carries an ID of the current registration session, and the TO field carries the registration user number.

A header field carrying an indicator of deregistering already registered other address information may be added in the above registration request (REGISTER) message. Assuming that the header field is named a RejectOthers header field, the format of the registration request (REGISTER) message is exemplified as follows:

REGISTER sip: 10.75.35.161:5060 SIP/2.0

Via: SIP/2.0/UDP 10.164.8.70:5060; branch=z9hG4bK3562787246

From: <sip:075589834250@10.75.35.161>; tag=3326082552

To: <sip:075589834250@10.75.35.161>

Call-ID: 1463786448@10.164.8.70

CSeq: 3 REGISTER

Contact: <sip:075589834250@10.164.8.70:5060>

RejectOthers: Yes

Max-Forwards: 5

User-Agent: Softphone v1.0

Expires: 300

Content-Length: 0

The RejectOthers header field is optional to the registration request (REGISTER) message. When the value of the header field is "Yes", the message requests to deregister other registration information.

In subsequent blocks, when reading the header field ID after passing the registration request authentication, the registrar replaces other registration information with the current registration.

In this block, a standard registration request (REGISTER) message may still be adopted, and in subsequent blocks, the message carries information of deregistering the precious registration to request to replace the previous registration.

Block 307: The registrar returns an Unauthorized message.

The registrar returns the Unauthorized message requesting the terminal A to send a user number password for authentication. A header field of the message carries a challenging word and an encryption algorithm for password encryption.

Block 308: The terminal A sends a registration request (REGISTER) message again.

The terminal A sends the registration request (REGISTER) message for registration again. A header field of the message carries information such as a user name, a password, a challenging word, and an encryption algorithm for authentication in addition to the Call-ID, user number, and registration address carried in Block 306. Meanwhile, the Call-ID is identical to that carried by the registration request (REGISTER) in Block 306.

If the terminal sends a standard registration request (REGISTER) message in Block 306, the registration request (REGISTER) message sent in this block carries information of deregistering the precious registration to request to replace the previous registration. The implementing method can refer to the description in Block 306.

Block 309: If the authentication is passed, the registrar replaces the registration on the terminal B with the registration on the terminal A, and returns a message indicating registration success.

The registrar passes the authentication on the user ID, and acquires the ID for deregistering other registration information from the RejectOthers header field of the received registration request (REGISTER) message. The registrar replaces other registration information with the current registration.

In this embodiment, the registrar deregisters the registration on the terminal B, and sets the registration address information of the terminal A as registered and kept in linking.

The registrar returns a message indicating registration success to the terminal A according to the SIP specification.

At this time, on the registrar, the registration on the terminal B is replaced by the registration on the terminal A. However, as the terminal B does not know the registration on the terminal B has been deregistered, it will continue sending the registration request (REGISTER) message for being kept in linking to the registrar, and therefore the registrar needs to inform the terminal B of the deregistration.

The terminal B can be informed of the deregistration in two ways. One is that the registrar returns an already deregistered message to the terminal B on receiving the registration request (REGISTER) message for being kept in linking from the terminal B. The other is that the registrar directly informs the terminal B of the deregistration after the terminal B is deregistered.

The first way is illustrated in the first method embodiment of the SIP-based user registration in the present invention. A signaling flow is adopted to illustrate the second way in the second method embodiment of the SIP-based user registration in the present invention. The method includes the following blocks.

Block 310: The registrar sends a message to inform the terminal B that the registration on the terminal B has been deregitered.

After deregistering the terminal B, the registrar directly sends a message to inform the terminal B of the deregistration. The adopted message may be a MESSAGE or an INFO message capable of carrying the current registration address information.

The message format is exemplified as follows:

MESSAGE sip:075589834250@10.75.35.161 SIP/2.0

Via: SIP/2.0/UDP 10.164.8.70:5060; branch=z9hG4bK3562787246

Call-ID:1463786448@10.164.8.70

From: <sip:999@10.75.35.161>; tag=3326082552

To: <sip:075589834250@10.75.35.161>

CSeq: 1 Message

Contact: <sip:999@10.71.103.58:5060; user=phone>

Max-Forwards: 70

Content-Length: 137

Content-Type: text/xml

<info>

<cmd>logout</cmd>

<CurrentContact>
sip:075589834250@10.170.8.100:5060;user=phone;expires=300</CurrentContact>

</info>

In the above message, the value of the cmd parameter is logout, indicating that the terminal is deregistered. The value of the current registration address (CurrentContact) parameter is the terminal address information that currently replaces the previous terminal registration, that is, the address information of the terminal A in this embodiment.

On receiving the message, the terminal B may know that the registration on the terminal B has been deregisteredand and will no longer regularly send a registration request message for being kept in linking to the registrar. Meanwhile, the terminal B may output a display to prompt the user that the registration on the terminal B has been deregistered. If the message sent by the registrar carries the registration address information of the terminal A currently linked to the registrar, the terminal B may output a display to prompt the user that the user number has already been registered on the other terminal, the registration address is the registration address of the terminal A, and the registration on the terminal B has already been deregistered.

The process ends.

This embodiment is applicable to all SIP-based systems, such as NGN and IMS. In the NGN system, the registrar is implemented through softswitch.

In view of the above, the SIP-based user registration methods of the present invention are provided through embodiments when a user has to register on the other terminal before deregistering a previous registration on an original terminal. Therefore, the registrar may inform the terminal of the original registration of the deregistration after replacing the original registration with the registration on a new terminal. As such, the terminal of the original registration may not regularly send a registration request (REGISTER) message for being kept in linking to the registrar. Therefore, the original terminal and the terminal of the new registration may not be stuck in a circular registration.

Further, several optional solutions are provided for the SIP-based user registration method in embodiments of the present invention. Thereby, the user is informed of the registration on the other terminal, and the user determines whether to replace the previous registration, or the terminal determines whether to replace the previous registration.

Meanwhile, in an SIP-based user registration method according to embodiments of the present invention, the message carries the address of the registration terminal, and the terminal displays the registration address to the user when informed of the registration on the other terminal.

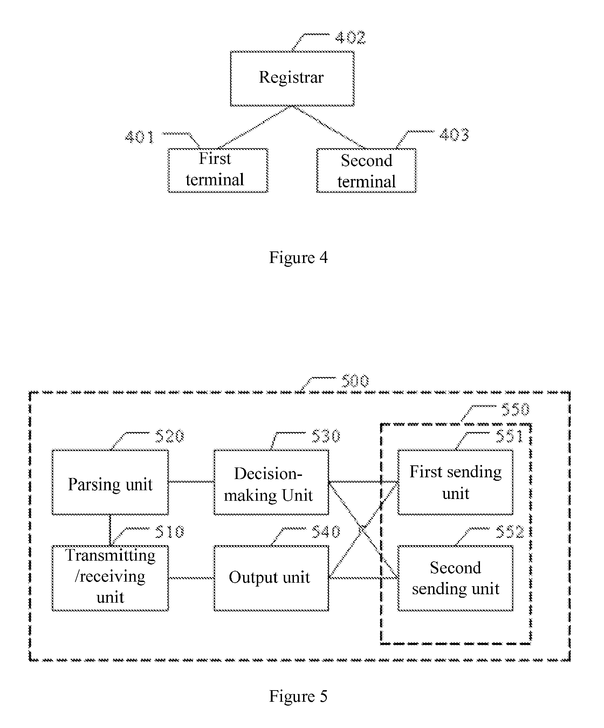

A structural view of an SIP-based user registration system according to embodiments of the present invention is shown in Figure 4. Referring to Figure 4, the system includes a first terminal 401, a registrar 402, and a second terminal 403;

the first terminal 401 is adapted to send a registration request message carrying a user number, and send a message requesting to replace a previous registration with the current registration on receiving a message indicating that the user number has already been registered on the second terminal and when it is determined to replace the registration on the second terminal;

the registrar 402 is adapted to receive the registration request message, send a message indicating that the user number has already been registered on the second terminal to the first terminal 401 after discovering that the user number has already been registered on the second terminal, register the first terminal 401 on receiving the message requesting to replace a previous registration returned by the first terminal 401, then deregister the second terminal and replace the registration on the second terminal with the current registration, and finally send an already deregistered message; and

the second terminal 403 is adapted to stop sending any registration request message to the registrar 402 on receiving the already deregistered message.

In an SIP-based user registration system according to embodiments of the present invention, the first terminal or the second terminal is substantially an ordinary terminal. In this system, the first terminal is adapted to send a new registration request, and the second terminal is employed in the previous registration.

The inner structures of the terminal and the registrar in the SIP-based user registration system according to the embodiments of the present invention are illustrated in detail below.

The operating manner of the SIP-based user registration system according to the embodiments of the present invention is similar to the SIP-based user registration method according to the embodiments of the present invention, so the details will not be repeated herein again.

In a first embodiment of the terminal in the present invention, a terminal is adapted to send a new registration request, and has a structure as referring to Figure 5. The terminal 500 includes a transmitting/receiving unit 510, a parsing unit 520, a processing unit 550, a decision-making unit 530, and/or an output unit 540;

the transmitting/receiving unit 510 is adapted to send a registration request message carrying a user number to a registrar, and receive a message returned by the registrar;

the parsing unit 520 is adapted to parse the message returned by the registrar, and determine whether the user number has already been registered on the other terminal;

the processing unit 550 is adapted to send to the registrar a message requesting to replace a previous registration when the user number has already been registered on the other terminal and it is determined to replace the registration on the other terminal. Thereby, the registrar registers the terminal sending the request, deregisters the other terminal and replaces the registration on the other terminal with the current registration, and then sends an already deregistered message to inform that the registration on other terminal has been deregitered;

the decision-making unit 530 is adapted to determine whether to replace the registration on the other terminal or not; and/or

the output unit 540 is adapted to output a prompt to prompt the user that the user number has already been registered on the other terminal, and let the user decide whether to replace the registration on the other terminal with the current registration.

During the actual design, the terminal may include the decision unit 530 or the output unit 540, for determining whether to replace the registration on the other terminal. Or, the terminal may include both the decision unit 530 and the output unit 540, and determine via one of the units. The processing unit 550 includes a first sending unit 551 or a second sending unit 552;

the first sending unit 551 is adapted to send a registration request message to the registrar. The registration request message carries registration address information of the other terminal, and an expire of the registration request message is set as 0. Thereby, the registrar deregisters the registration on the other terminal and carries the address information of the terminal sending the request in the registration request message, so as to register the terminal sending the request; or

the second sending unit 552 is adapted to send a registration request message to the registrar. The registration request message carries an indicator of deregistering already registered other address information. Thereby, the registrar registers the terminal sending the request and deregisters the other terminal.

During the actual design, the terminal may include the first sending unit 551 or the second sending unit 552, for determining whether to replace the registration on the other terminal. Or, the terminal may include both the first sending unit 551 and the second sending unit 552, and determine via one of the units.

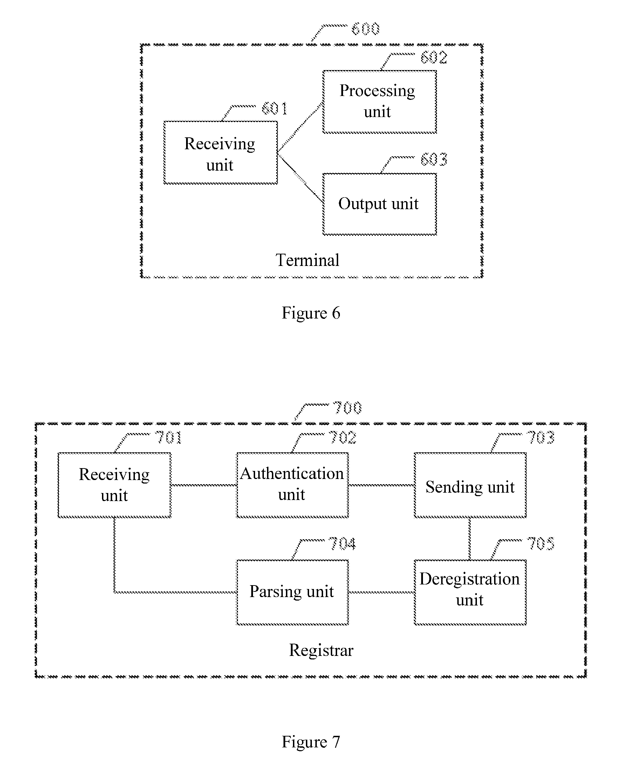

In a second embodiment of the terminal in the present invention, a terminal is employed in the previous registration, and has a structure as shown in Figure 6. The terminal 600 includes a receiving unit 601, a processing unit 602, and an output unit 603;

the receiving unit 601 is adapted to receive a message informing that a registration has been deregistered;

the processing unit 602 is adapted to make the terminal stop sending a registration request message to a registrar on receiving the message informing that the registration has been deregistered; and

the output unit 603 is adapted to output a prompt to prompt the user that the user number has already been registered through a current registration address when the received message informing that the registration has been deregistered contains the registration address information currently linked to the registrar.

In embodiments of the present invention, a registrar is provided and has a structure as shown in Figure 7. The registrar 700 includes a receiving unit 701, an authentication unit 702, a sending unit 703, a parsing unit 704, and a deregistration unit 705;

the receiving unit 701 is adapted to receive a registration request message carrying a user number from a terminal, and receive a message requesting to replace a previous registration returned by the registrar;

the authentication unit 702 is adapted to authenticate the registration request;

after the authentication on the registration request is passed, the sending unit 703 is adapted to send a message indicating that the user number has already been registered on the other terminal to the terminal after discovering the user number has already been registered on the other terminal, and send a message to inform the other terminal of the deregistration when the registration/deregistration unit replaces the registration on the other terminal with the current registration;

the parsing unit 704 is adapted to parse the message requesting to replace the previous registration, and determine whether to replace the registration on the other terminal with the current registration; and

the deregistration unit 705 is adapted to register the terminal sending the request, deregister the other terminal, and replace the registration on the other terminal with the current registration according to the message requesting to replace the previous registration.

The operating manners of the terminal and registrar according to the embodiments of the present invention are similar to the SIP-based user registration method according to the embodiments of the present invention, so the details will not be repeated herein again.

Those of ordinary skill in the art should understand that the whole or part of the blocks in the method according to the embodiments can be performed by related hardware under the instruction of a program. The program can be stored in a computer readable storage medium. When the program is executed, the storage medium may be a ROM, magnetic disk, or optical disk.

In view of the above, an SIP-based user registration method, system, terminal, and server provided by the present invention are described in detail. The principle and implementing manners of the present invention are illustrated through embodiments. However, the above embodiments are only adopted for facilitating the comprehension of the method and theme of the present invention. Those of ordinary skill in the art can make modifications and variations without departing from the spirit of the present invention. Therefore, the content of the present invention may not limit the scope of the same.

## Claims

1. A session initiation protocol (SIP)-based user registration method, comprising:
sending, by a terminal, a registration request message carrying a user number to a registrar; and
receiving, by the terminal, a message returned from the registrar; when the message indicates that the user number has already been registered on other terminal and it is determined to replace the registration on the other terminal, sending a message requesting to replace a previous registration to the registrar for requesting to replace the registration on the other terminal with the current registration.

2. The SIP-based user registration method according to claim 1, wherein the determining to replace the registration on the other terminal comprises:
determining, by the terminal, to replace the registration on the other terminal; or
outputting, by the terminal, a prompt to prompt the user that the user number has already been registered on the other terminal, and receiving the determination of replacing the registration on the other terminal with the current registration by the user.

3. The SIP-based user registration method according to claim 1 or 2, further comprising:
receiving, by the terminal, a message returned from the registrar; when the message indicates that the user number has already been registered on the other terminal and the terminal has determined to quit, outputting, by the terminal, a prompt to prompt the user that the user number has already been registered on the other terminal, and quitting the registration.

4. The SIP-based user registration method according to claim 1, wherein the registration request message carries registration address information of the other terminal, and an expire of the registration request message is set as 0; or
the registration request message carries an indicator of deregistering already registered other address information.

5. A session initiation protocol (SIP)-based user registration method, comprising:
receiving a registration request message carrying a user number sent by a terminal;
sending a message indicating that the user number has already been registered on other terminal to the terminal after discovering that the user number has already been registered on the other terminal; and
registering the terminal sending the request on receiving a message of requesting to replace a previous registration returned from the terminal, deregistering the registration on the other terminal, and sending information to inform that the registration on the other terminal has been deregistered.

6. The SIP-based user registration method according to claim 5, further comprising:
carrying, in the message indicating that the user number has already been registered on the other terminal, address information of the other terminal.

7. The SIP-based user registration method according to claim 5 or 6, wherein the sending information to inform that the registration on the other terminal has been deregistered comprises :
sending a message to the other terminal to inform that the registration on the other terminal has been deregistered after receiving the registration request message regularly sent by the other terminal; or
sending a message to the other terminal to inform that the registration of the other terminal has been deregistered after having deregistered the registration on the other terminal.

8. The SIP-based user registration method according to claim 7, further comprising:
carrying, in the message informing that the registration on the other terminal has been deregistered, current registration address information.

9. A session initiation protocol (SIP)-based user registration system, comprising:
a first terminal, adapted to send a registration request message carrying a user number, and send a message requesting to replace a previous registration on receiving a message indicating that the user number has already been registered on a second terminal and when it is determined to replace the registration on the second terminal;
a registrar, adapted to receive the registration request message, send a message indicating that the user number has already been registered on the second terminal to the first terminal after discovering that the user number has already been registered on the second terminal, register the first terminal on receiving the message requesting to replace the previous registration returned by the first terminal, deregister the registration on the second terminal, and notify the second terminal that the registration on the second terminal has been deregistered; and
the second terminal, adapted to stop sending any registration request message to the registrar on receiving the notification.

10. A terminal, comprising:
a transmitting/receiving unit, adapted to send a registration request message carrying a user number to a registrar, and receive a message returned by the registrar;
a parsing unit, adapted to parse the message returned by the registrar, and determine whether the user number has already been registered on other terminal; and
a processing unit, adapted to send a message requesting to replace a previous registration to the registrar when the user number has already been registered on the other terminal and it is determined to replace the registration on the other terminal.

11. The terminal according to claim 10, further comprising:
a decision-making unit, adapted to determine whether to replace the registration on the other terminal; and/or
an output unit, adapted to output a prompt to prompt the user that the user number has already been registered on the other terminal, and receive a determination from the user whether to replace the registration on the other terminal with the current registration.

12. The terminal according to claim 10 or 11, wherein the processing unit comprises:
a first sending unit, adapted to send the registration request message to the registrar, wherein the registration request message carries registration address information of the other terminal, and an expire of the registration request message is set as 0; or
a second sending unit, adapted to send the registration request message to the registrar, wherein the registration request message carries an indicator of deregistering already registered other address information.

13. A terminal, comprising:
a receiving unit, adapted to receive a message informing that a registration has been deregistered; and
a processing unit, adapted to make the terminal stop sending any registration request message to a registrar on receiving the message informing that the registration has been deregistered.

14. The terminal according to claim 13, further comprising:
an output unit, adapted to output a prompt to prompt a user that a user number has already been registered through a registration address , when the received message informing that the registration has been deregistered contains the registration address information currently linked to the registrar.

15. A registrar, comprising:
a receiving unit, adapted to receive a registration request message carrying a user number sent by a terminal, and receive a message requesting to replace a previous registration returned by the terminal;
a deregistration unit, adapted to register the terminal sending the request, and deregister the previous registration on other terminal according to the message requesting to replace the previous registration; and
a sending unit, adapted to send a message indicating that the user number has already been registered on the other terminal to the terminal after discovering that the user number has already been registered on the other terminal, and send a message to the other terminal informing that the deregistration unit has deregistered the registration on the other terminal.

16. The registrar according to claim 15, further comprising:
a parsing unit, adapted to parse the message requesting to replace the previous registration, and determine whether to replace the registration on the other terminal with the current registration.
